(19) **Europäisches Patentamt / European Patent Office / Office européen des brevets**

(11) **EP 1 598 663 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(51) Int Cl.:
***G01N 23/207*** *(2006.01)*

(21) Anmeldenummer: **05009958.9**

(22) Anmeldetag: **06.05.2005**

(54) **Vorrichtung und Verfahren zur Röntgenanalyse mit zweidimensionalem Array-Detektor**

Method and apparatus for X-ray analysis with a two-dimensional array-detector

Procédé et appareil d'analyse aux rayons X avec un Réseau de détecteurs bidemensionnel

(84) Benannte Vertragsstaaten:
**DE GB NL**

(30) Priorität: **21.05.2004 DE 102004025121**

(43) Veröffentlichungstag der Anmeldung:
**23.11.2005 Patentblatt 2005/47**

(73) Patentinhaber: **Bruker AXS GmbH**
**76187 Karlsruhe (DE)**

(72) Erfinder:
  • **Gerndt, Ekkehard, Dr.**
    **76227 Karlsruhe (DE)**
  • **Jacob, Michael**
    **76149 Karlsruhe (DE)**

(74) Vertreter: **Kohler Schmid Möbus**
**Patentanwälte**
**Ruppmannstrasse 27**
**70565 Stuttgart (DE)**

(56) Entgegenhaltungen:
WO-A-00/50879     US-A- 5 491 738
US-A- 6 064 717     US-B1- 6 408 047

  • **B. MIKULEC: "Development of segmented semiconductor arrays for quantum imaging" NUCLEAR INSTRUMENTS AND METHODS IN PHYSICS RESEARCH A, Bd. 510, 2003, Seiten 1-23, XP002445422 Elsevier**
  • **N. WERMES: "Pixel detectors for particle physics and imaging applications" NUCLEAR INSTRUMENTS AND METHODS IN PHYSICS RESEARCH A, Bd. 512, 2003, Seiten 277-288, XP002445423**
  • **HERBERT E. GÖBEL: "A new method for fast XRPD using a position sensitive detector" ADVANCES IN X-RAY ANALYSIS, Bd. 22, 1978, Seiten 255-265, XP008082012**

EP 1 598 663 B1

**Beschreibung**

Die Erfindung betrifft ein Verfahren zum Betrieb eines Röntgenanalysegerätes mit einer Quelle für Röntgenstrahlung, einem zu untersuchenden Objekt, das mit der Röntgenstrahlung beleuchtet wird, und einem flächigen zweidimensionalen Array-Detektor mit Pixel-Elementen zum ortsaufgelösten Nachweis der von dem Objekt ausgehenden Röntgenstrahlung, wodurch ein Datensatz, insbesondere in Form eines digitalisierten Difraktogramms und/oder Spektrums erhalten wird. Des Weiteren betrifft die Erfindung ein Röntgenanalysegerät zum Durchführen des Verfahrens.

Zweidimensionale Array-Detektoren, die in Röntgenanalysegeräten der oben genannten Art Verwendung finden sind unter Anderem aus Gerhard Lutz "Semiconductor radiation detectors", B. Mikulec et al. "Development of Segmented Semiconductor Arrays for Quantum Imaging" Elsevier Science, N. Wermes "Pixel detectors for particle physics and imaging applications" Elsevier Science Direct und Edwin M. Westbrook National Institute of Health Förderantrag www.brunel.ac.uk/research/rose/3D/publications.html bekannt. Derartige Array Detektoren bestehen aus einer Vielzahl an fotosensitiven Pixel-Elementen, die in Form eines Arrays auf einem Chip angeordnet sind. Der Sensor-Chip ist für gewöhnlich mittels Bump-Bonding mit einem ASIC (Application Specific Circuit) kontaktiert, der elektronische Kanäle, Verstärker und Diskriminatoren umfasst. Da die fotosensitiven Pixel-Elemente fest mit dem ASIC verbunden sind und ein Austausch eines fehlerhaften Pixel-Elements nicht möglich ist, stellen fehlerhafte, insbesondere blinde Pixel-Elemente ein großes technisches Problem dar. Es wird zwar versucht, die Anzahl der blinden Pixel-Elemente durch Fertigungsverbesserung zu reduzieren, aufgrund der großen Komplexität der Hybridfertigung (Sensor, Bump-Bonds, hochintegriertes ASIC) wird es jedoch auf absehbare Zeit nur sehr teure 100 % funktionierende Pixel-Detektoren geben. Für gewöhnlich nimmt man deshalb das Vorhandensein von vereinzelten blinden Pixel-Elementen und die dadurch auftretenden fehlenden Informationen in den entsprechenden Bereichen in Kauf.

Um den dadurch resultierenden störenden Effekt von beispielsweise schwarzen Bildbereichen (tote Pixel) zu vermeiden ist es bekannt, mehrere Pixel zu einem Superpixel zusammenzufassen. Durch dieses Verfahren wird jedoch die Auflösung der entsprechenden Aufnahmen verschlechtert. Möchte man Effekte beobachten, die in der Größenordnung eines Pixel-Elements liegen, können einzelne blinde Pixel-Elemente zu einer gravierenden Datenverfälschung führen, da möglicherweise genau die Bereiche der toten Pixel wichtige Informationen enthalten würden.

Neben zweidimensionalen Array-Detektoren sind eindimensionale Detektoren bekannt (H. Göbel, Adv. In X-Ray Analysis 22 (1978) 255-265), die mit Hilfe eines Goniometers durch Veränderung des 20-Wertes über den für die Messung interessanten Bereich verfahren werden können, so dass bestimmte Messbereiche von verschiedenen Pixeln erfasst werden können. Mit dieser Methode sind jedoch lediglich eindimensionale Aufnahmen möglich. Des Weiteren muss bei einer derartigen Anordnung die Optik zum Fokussieren der Strahlung auf den Detektor mit dem Detektor verfahren werden, was eine aufwändige und besonders stabile Konstruktion des Aufbaus erfordert.

Aufgabe der vorliegenden Erfindung ist es daher, ein Verfahren zum Betrieb eines Röntgenanalysegeräts mit einem zweidimensionalen Array-Detektor mit Pixel-Elementen vorzuschlagen, das es erlaubt, trotz des Vorhandenseins blinder Pixel-Elemente im Detektor, die Anzahl der toten Pixel im Datensatz zu reduzieren beziehungsweise zu vermeiden und so einen möglichst vollständigen Datensatz zu erhalten. Des Weiteren soll ein Röntgenanalysegerät vorgeschlagen werden, mit dem dieses Verfahren ausgeführt werden kann.

Diese Aufgabe wird erfindungsgemäß durch ein Verfahren zum Betrieb eines Röntgenanalysegeräts gelöst, das sich durch folgende Schritte auszeichnet:

a) Aufnahme eines ersten Datensatzes in einer ersten relativen räumlichen Position von Quelle, Objekt und Detektor;
b) Verschieben und/oder Drehen des Detektors in der Detektorfläche relativ zu Quelle und Objekt, wobei die relative Position von Quelle und Objekt nicht verändert wird;
c) Aufnahme eines zweiten Datensatzes in der nach Schritt b) verschobenen Position, wobei mit der Verschiebung und/oder Drehung des Detektors zwischen zwei Aufnahmen von Datensätzen weniger als 10 Pixel überstrichen werden.;
d) Überlagern der aufgenommenen Datensätze zu einem Gesamtdatensatz, wobei die Pixel der aufgenommenen Datensätze entsprechend ihrer tatsächlichen relativen Position zu Quelle und Objekt kombiniert werden.

Durch das Verschieben des Detektors zwischen den Aufnahmen zweier Datensätze verschieben sich schadhaften Pixel-Elemente relativ zu dem zu untersuchenden Objekt, so dass mit einer relativ hohen Wahrscheinlichkeit die vom Objekt ausgehende Strahlung, die bei der ersten Aufnahme auf schadhafte Pixel-Elemente getroffen ist, nach dem Verschieben bei der Aufnahme des zweiten Datensatzes auf ein fotosensitives Pixel-Element trifft. Durch die Überlagerung der beiden aufgenommenen Datensätze kann eine effizientere Detektion der Röntgenstrahlung erfolgen und die Anzahl toter Pixel im Gesamtdatensatz reduziert werden. Aufgrund der Verschiebung und/oder Drehung des Detektors um weniger als 10 Pixel wird ein möglichst großer Überlapp der mehrfach vermessenen Bereiche realisiert.

Bei einer bevorzugten Variante des erfindungsgemäßen Verfahrens werden vor Schritt d) die Schritte

b) bis c) mit variierender Verschiebung einmal oder mehrfach wiederholt. Hierdurch kann die Anzahl der toten Pixel im Datensatz beliebig reduziert werden.

Eine Weiterbildung dieser Variante sieht vor, dass die Datensätze während einer kontinuierlichen, vorzugsweise periodischen Verschiebung und/oder Drehung des Detektors aufgenommen werden. Der Gesamtdatensatz umfasst dann die aufintegrierten Daten zwischen zwei Positionen des Detektors.

In einer besonders bevorzugten Variante des Verfahrens wird der Detektor daher zwischen zwei Aufnahmen von aufeinander folgenden Datensätzen um genau ein Pixel-Element verschoben.

Eine weitere Aufgabe der Erfindung ist es, ein Verfahren zum Betrieb eines Röntgenanalysegeräts vorzuschlagen, das die Messung eines Datensatzes mit einer Auflösung erlaubt, die größer ist als die Ausmaße der einzelnen Pixel-Elemente.

Eine weitere Variante des erfindungsgemäßen Verfahrens sieht daher vor, dass zwischen zwei Aufnahmen von aufeinander folgenden Datensätzen der Detektor um einen Bruchteil, vorzugsweise $\frac{1}{n}$ eines Pixel-Elements, verschoben wird, wobei $n \in N$, vorzugsweise $n < 10$. Durch diese Verschiebung des Detektors um ein Subpixel kann die Ortsauflösung erhöht werden. Dies ist insbesondere für Detektoren mit großen Pixel-Elementen vorteilhaft beziehungsweise für die Aufnahme sehr kleiner Strukturen. Die Auflösung des Detektors wird hierdurch derart verbessert, dass Strukturen innerhalb eines Pixel-Elements detektiert werden können. Um eine einheitliche Auflösung über den gesamten Detektor-Bereich zu bekommen, müssen n Verschiebungen mit den entsprechenden Aufnahmen durchgeführt werden.

In einer vorteilhaften Variante des Verfahrens umfassen die Verschiebungen des Detektors unterschiedliche Richtungen in der Detektor-Fläche. Die Verschiebung des Detektors kann dann innerhalb der ganzen Fläche des Detektors erfolgen, so dass eine Optimierung bezüglich der Lage der toten Pixel vereinfacht wird.

Da bei dem erfindungsgemäßen Verfahren einige Bereiche des Datensatzes, insbesondere die Randbereiche, weniger oft aufgenommen werden, als der zentrale Bereich des Datensatzes, ist es vorteilhaft, wenn in Schritt d) die Pixel der Randbereiche des gesamten Datensatzes, zu denen nicht die Datensätze aller Einzelaufnahmen beitragen, entsprechend dem Inversen ihrer Aufnahmehäufigkeit gewichtet werden. Für jedes Pixel ergibt sich dann eine mittlere Signalintensität.

In einer besonders bevorzugten Variante des erfindungsgemäßen Verfahrens werden jedem Pixel-Element individuell eine Empfindlichkeit und/oder ein statistischer Fehler und/oder ein Offset für den aufgenommenen Messwert zugeordnet, die in Schritt d) in einer Gewichtung des jeweiligen Pixels bei der Überlagerung der aufgenommenen Datensätze berücksichtigt werden. Die Aufnahmen der einzelnen Datensätze werden somit nicht durch die variierende Empfindlichkeit und/oder den statistischen Fehler beziehungsweise durch einen Offset verfälscht.

Die Überlagerung der aufgenommenen Einzeldatensätze erfolgt vorzugsweise derart, dass für die zu überlagernden Datenpunkte jeweils der Offset subtrahiert, der Messwert entsprechend der Empfindlichkeit des jeweiligen Pixel-Elements normiert und invers zur Größe des zugeordneten statistischen Fehlers gewichtet wird, wobei für jedes Pixel die Gesamtwichtung 1 beziehungsweise 100 % ergibt.

In einer Variante des erfindungsgemäßen Verfahrens werden die Beiträge einzelner Pixel-Elemente bei der Überlagerung der Datensätze in Schritt d) fest mit 0 gewichtet, insbesondere bei schadhaften Pixel-Elementen, von denen bekannt ist, dass sie blind sind, stark fluktuierende Signale erzeugen oder dauernd ihren Sättigungswert anzeigen. Aufgrund der stark verfälschenden Auswirkungen derartiger Pixel-Elemente erscheint es vorteilhaft, diese mit 0 zu wichten und die Werte der entsprechenden Pixel für den Gesamtdatensatz aus den verbleibenden Datensätzen zu gewinnen.

Um tote Pixel im Gesamtdatensatz zu vermeiden, muss jedes Pixel mindestens einmal von einem nicht mit 0 gewerteten Pixel-Element aufgenommen werden. Es ist daher vorteilhaft, die Trajektorien der jeweiligen Verschiebungen an die räumliche Verteilung der schadhaften Pixel-Elemente anzupassen, insbesondere derart, dass möglichst kein Datenpunkt des Gesamtdatensatzes ausschließlich aus der Überlagerung von Signalbeiträgen schadhafter Pixel-Elemente besteht.

Aus fertigungstechnischen Gründen ist es von Vorteil, wenn der Detektor aus mehreren jeweils über blinde Randbereiche aneinander angrenzenden Sensorchips zusammengesetzt ist, und dass die blinden Randbereiche wie schadhafte Pixel-Elemente behandelt werden. Obwohl derartig zusammengesetzte Detektoren viele nicht fotosensitiven Bereiche aufweisen, ist es durch das erfindungsgemäße Verfahren möglich, Gesamtdatensätze aufzunehmen, die keine Löcher aufgrund der fehlenden aktiven Pixel-Elemente an den entsprechenden Randbereichen der Sensorchips aufweisen.

Vorzugsweise werden die Trajektorien der jeweiligen Verschiebungen so gewählt, dass der gesamte statistische Fehler des Gesamtdatensatzes minimiert wird. Auf diese Weise können tote Pixel beziehungsweise mit 0 gewichtete Pixel auf möglichst viele verschiedene Positionen verteilt und Doppelblindmessungen vermieden werden.

Die Erfindung betrifft des Weiteren ein Röntgenanalysegerät mit einer Quelle für Röntgenstrahlung an einem zu untersuchenden Objekt, das mit der Röntgenstrahlung beleuchtet wird und einem flächigen zweidimensionalen Array-Detektor mit Pixel-Elementen zum ortsaufgelösten Nachweis der von dem Objekt ausgehenden Röntgenstrahlung, wodurch ein Datensatz, insbesondere in Form eines digitalisierten Diffraktogramms und/oder Spektrums, erhalten wird. Das erfindungsgemäße Röntgenanalysegerät zeichnet sich dadurch aus, dass es Mittel zum

a) Aufnehmen eines ersten Datensatzes in einer ersten relativen räumlichen Position von Quelle, Objekt und Detektor,

b) Verschieben und/oder Drehen des Detektors in der Detektorfläche relativ zur Quelle und zum Objekt, wobei die relative Position von Quelle und Objekt nicht verändert wird,

c) Aufnehmen eines zweiten Datensatzes in der nach Schritt b) verschobenen Position,

d) Überlagern der aufgenommenen Datensätze zu einem Gesamtdatensatz, wobei die Pixel der aufgenommenen Datensätze entsprechend ihrer tatsächlichen relativen Position zu Quelle und Objekt kombiniert werden,

aufweist.

Vorzugsweise ist das Röntgenanalysegerät zur Durchführung des zuvor beschriebenen Verfahrens eingerichtet.

Eine vorteilhafte Ausführungsform des erfindungsgemäßen Röntgenanalysegeräts sieht einen Piezoantrieb zum Verschieben des Detektors vor. Mit einem Piezoantrieb sind Verschiebungen auf μm-Skala und darunter realisierbar, so dass nahezu beliebige Verschiebungen des Detektors möglich sind.

Eine weitere Ausführungsform des Röntgenanalysegerätes sieht vor, dass der Array-Detektor zusammen mit einer ersten Stufe einer Auswerte-Elektronik auf einem während der Messung nicht bewegten Träger beweglich angeordnet ist, wobei die erste Stufe über eine flexible Verbindung mit einer weiteren Stufe der Auswerte-Elektronik für Signalübertragung elektrisch verbunden ist. Auf diese Weise kann ein schneller Vorverstärker sehr nahe am Detektor angebracht werden, wodurch sich eine Verbesserung des Signal/Rausch-Verhältnisses ergibt. Durch die flexible Verbindung der ersten Stufe mit einer weiteren Stufe der Auswerte-Elektronik wird die Beweglichkeit des Detektors gewährleistet.

Eine Weiterbildung des erfindungsgemäßen Röntgenanalysegeräts sieht vor, dass die flexible Verbindung eine dünne Folie, vorzugsweise eine Polyimidfolie mit integrierten Leiterbahnen umfasst.

In einer speziellen Ausführungsform des erfindungsgemäßen Röntgenanalysegeräts beträgt die Breite B der blinden Randbereiche ein ganzzahliges Vielfaches der Breite b eines Pixel-Elements. Die aufgrund der nichtsensitiven Randbereiche im ersten Einzeldatensatz fehlenden Datenpunkte können dann durch eine Verschiebung des Detektors um eine ganzzahlige Anzahl an Pixel-Elementen erhalten werden.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen

Fig. 1 eine schematische Darstellung der wesentlichen Elemente eines Röntgenanalysegeräts mit einem erfindungsgemäßen Array-Detektor;

Fig. 2 einen aus mehreren Sensorchips bestehender Einzeldetektor mit schadhaften Pixel-Elementen;

Fig. 3a eine schematische Darstellung der Verteilung toter Pixel in einem mit dem Einzeldetektor aus Fig. 2 aufgenommenen Datensatz;

Fig. 3b eine schematische Darstellung der Verteilung toter Pixel in einem Gesamtdatensatz , der aus einer Überlagerung von zwei mit dem Einzeldetektor aus Fig. 2 aufgenommenen Einzeldatensätzen erhalten wurde;

Fig. 4 eine Verschiebung eines Array-Detektors um ein Subpixel-Element; und

Fig. 5 eine Verschiebung schadhafter Pixel-Elemente bei einem rotationssymmetrisch aufgebauten Einzeldetektor.

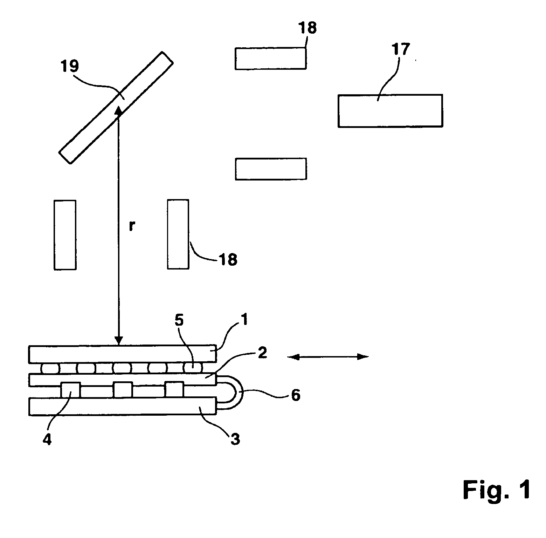

**Fig. 1** zeigt schematischen die wesentlichen Elemente eines Röntgenanalysegeräts. Die von einer Quelle **17** emittierte Röntgenstrahlung wird mittels optischer Elemente **18** modifiziert und setzt ein Objekt **19** spezieller Röntgenstrahlung aus. In Bragg-Brentano wird z.B. der Röntgenstrahl mittels optischer Elemente 18 auf den Detektor fokussiert. Mittels eines erfindungsgemäßen Array-Detektors wird die von dem Objekt 19 ausgehende Röntgenstrahlung detektiert. Dabei kann es sich sowohl um Streu-, Transmissions- oder Beugungsstrahlung handeln. Der Array-Detektor ist mit einem röntgenempfindlichen Einzeldetektor **1**, einer ersten Stufe **2** einer Auswerteelektronik (ASIC), einem Träger **3** und einem Piezoantrieb **4** ausgestattet, wobei der Einzeldetektor 1 mittels Bumps **5** mit der ersten Stufe **2** der Auswerteelektronik zu einer weiteren Stufe der Auswerteelektronik, die sich beispielsweise auf dem Träger 3 befinden kann, beinhaltet. Durch Anlegen einer elektrischen Spannung an die Piezoelemente des Piezoantriebs 4 kann der Einzeldetektor 1 mit der ersten Stufe **2** der Auswerteelektronik gegenüber dem Träger 3 und einem Objekt 19 in der Ebene, in der sich der Einzeldetektor 1 befindet, verschoben werden. Dieses Verschieben kann aufgrund der Verwendung eines Piezoantriebs 4 höchst präzise, mit einem geringen Hub und mit einer hohen Geschwindigkeit ausgeführt werden. Das erfindungsgemäße Verfahren sieht vor, dass bei dem Verschieben des Einzeldetektors 1 nicht der gesamte Detektor, sondern lediglich der Einzeldetektor 1 mit der damit verbundenen ersten Stufe 2 der Auswerteelektronik verschoben wird. Damit wird einerseits die Masse der zu verschiebenden Bauteile gering gehalten, so dass die Verschiebung schnell und auf einfache Weise durch Einsatz eines Piezoantriebs 4 erfolgen kann, andererseits kann durch das Mitverschieben der ersten Stufe 2 der Auswerteelektronik eine rauscharme Vorverstärkung und erste digitale Verarbeitung der detektierten Signale erfolgen und somit ein gutes Signal/Rauschverhältnis erzielt werden. Die Verschiebung des Einzeldetektors 1 erfolgt dabei in einer oder in zwei Dimensionen derart, dass sich der radiale Abstand r des Einzeldetektors 1 zum Objekt 19 nicht verändert. Die Bewegung wird durch den Pfeil angedeutet. Somit besteht keine Notwendigkeit, eine Fokussierung auf eine neue Ebene vorzunehmen. Der Einzeldetektor 1 aus Fig. 1 ist hier in einer ebenen Bauweise dargestellt. Es ist jedoch auch denkbar, gekrümmte Ausführungsformen vorzusehen. Die Röntgenstrahlungs-empfindliche Pixel-Elemente des Einzeldetektors 1 bestehen typisch aus Si oder anderen Halbleitermaterialien wie zum Beispiel GaAs, CdTe, CZT. Die Auswerteelektronik 2 ist typisch in CMOS oder Bi-CMOS Technologie, z.B. in 0.35 $\mu$m Strukturgrößen, implementiert.

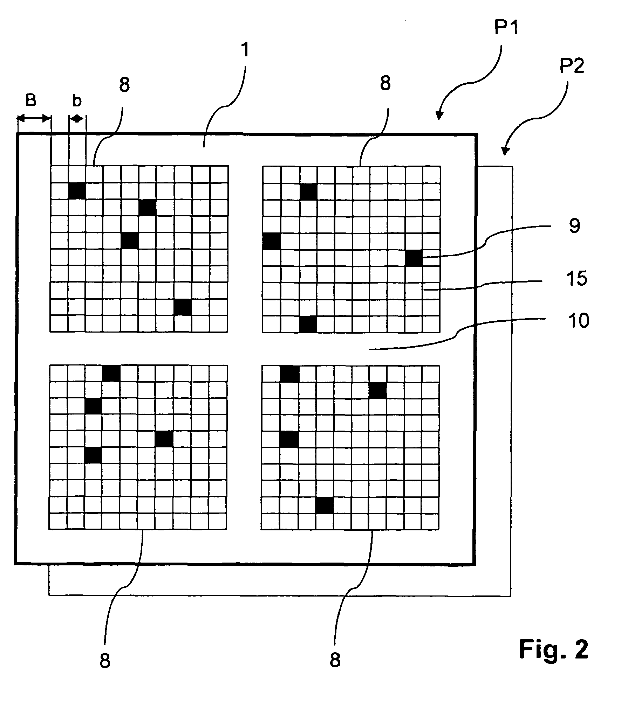

Ein Gesamtdetektor 1 ist in **Fig. 2** dargestellt. Da die einzelnen Sensorenchips **8**, die üblicherweise hergestellt werden, im Allgemeinen kleiner sind als die gewünschte Einzeldetektorfläche, ist der Einzeldetektor 1 aus mehreren Sensorchips 8 zusammengesetzt. Dies hat jedoch zur Folge, dass sich neben den in den Sensorchips 8 enthaltenen schadhaften Pixel-Elementen **9** zusätzlich noch Randbereiche **10** der Sensorchips 8 innerhalb der Einzeldetektorfläche befinden, aus denen keine Informationen für den aufzunehmenden Datensatz entnommen werden können. Sowohl die schadhaften Pixel-Elemente 9 als auch die Randbereiche 10 der Sensorchips 8 produzieren daher tote Pixel **12a, 12b** in einem aufgenommenen Datensatz **11**. Um Verfälschungen von Informationen innerhalb eines Datensatzes 11 zu vermeiden, werden schadhafte Pixel-Elemente 9 im Datensatz mit 0 gewichtet. Dazu zählen neben blinden Pixel-Elementen auch Pixel-Elemente, die stark fluktuierende Signale erzeugen oder dauernd ihren Sättigungswert erreichen. Derartige Pixel-Elemente können durch eine 0-Messung ausfindig gemacht werden. Gängige Sensorchips umfassen etwa 1.000 x 1.000 Pixel-Elemente. Der Einfachheit halber wurden die in Fig. 2 gezeigten Sensorchips 8 mit lediglich 10 x 10 Pixel-Elementen dargestellt.

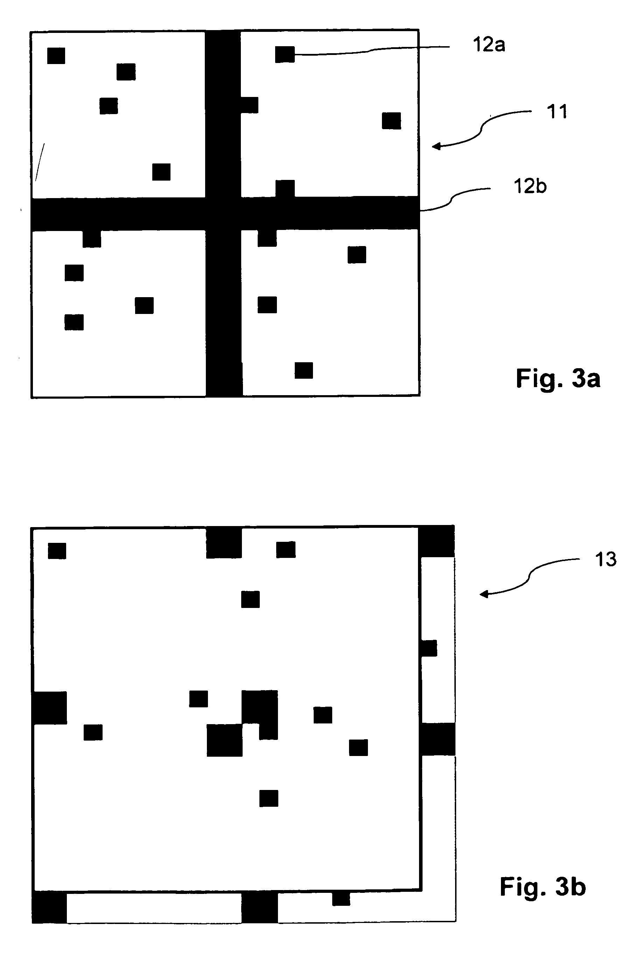

**Fig. 3a** zeigt eine schematische Darstellung der Verteilung toter Pixel 12a, 12b in einem Datensatz 11, der von einem Einzeldetektor 1 aufgenommen wurde, wie er in Fig. 2 dargestellt ist. Neben den vereinzelten toten Pixeln 12a, die aus den schadhaften Pixel-Elementen 9 des Einzeldetektors 1 resultieren, kann man deutlich die störenden Effekte der Randbereiche 10 der Sensorchips 8 erkennen, die sich als Streifen toter Pixel 12b im Datensatz 11 bemerkbar machen. Um derartige negative Randeffekte zu vermeiden, ist aus der Hochenergiephysik bekannt, die Sensorchips 8 in einer Stufengeometrie anzuordnen, so dass der Randbereich 10 eines Einzeldetektors 8 von einem weiteren Einzeldetektor 8 überdeckt wird. Auf diese Weise wird die Größe der gesamten Randbereiche 10 zumindest reduziert. Dies ist jedoch nicht praktikabel, wenn die zu detektierende Strahlung auf eine bestimmte Ebene fokussiert werden muss, wie es beispielsweise bei der Bragg-Brentano-Geometrie in der Röntgendiffraktometrie erforderlich ist.

Bei dem erfindungsgemäßen Verfahren sind die Sensorchips 8 daher in einer Ebene angeordnet. Der Einzeldetektor 1 wird nach einer ersten Aufnahme eines ersten Datensatzes in einer Position P1 von dieser Position P1 in eine Position P2 verfahren, wie in Fig. 2 gezeigt. In Position P2 wird ein weiterer Datensatz 11 aufgenommen, der mit dem ersten Datensatz 11 überlagert wird, so dass ein Gesamtdatensatz **13** entsteht. Die Breite **B** der blinden Randbereiche der Sensorchips 8 beträgt bei dem erfindungsgemäßen Verfahrens vorzugsweise ein ganzzahliges Vielfaches der Breite **b** eines Pixel-Elements, wobei die Breite b eines Pixel-Elements sich in der Größenordnung von 50 bis 100 $\mu$m bewegt. Auf diese Weise ist es möglich ein Pixel-Element in Position P1 mit einem Pixel-Element in Position P2 durch die Verschiebung des Einzeldetektors 1 um ein ganzzahliges Vielfaches eines Pixel-Elements 7 vollständig in Deckung zu bringen.

**Fig. 3b** zeigt die Verteilung der toten Pixel **12** im Gesamtdatensatz 13, der aus den Datensätzen 11 der Messungen in den Positionen P1 und P2 erhalten wird. Die Verschiebung des Einzeldetektors 1 ist hier willkürlich gewählt und betrug 2x2 Pixel-Elemente. Aus dem Gesamtdatensatz 13 kann man erkennen, dass die Anzahl der toten Pixel 12 gegenüber der Anzahl der toten Pixel 12a, 12b im Datensatz 11 aus Fig. 3 erheblich reduziert ist. Bei einer geeigneten Optimierung der Verschiebung des Einzeldetektors 1 kann eine weitere Reduzierung der toten Pixel 12 im Gesamtdatensatz 13 erreicht werden, idealer Weise zu Null toten Pixeln 12. Ebenso kann das Ergebnis durch Aufnahme weiterer Datensätze 11 in verschiedenen Positionen des Einzeldetektors 1 und deren Überlagerung zu einem Gesamtdatensatz 13 verbessert werden. Da sich durch die Aufnahme mehrerer Datensätze 11 die Messzeit verlängert, ist bei der Anwendung des erfindungsgemäßen Verfahrens zu beachten, dass die vorgegebene Messzeit lange genug gewählt werden kann, dass die Aufnahmen der einzelnen Datensätze 11 erfolgen können. Bei XRD (X-Ray Diffraction) beispielsweise ist dies in den meisten Fällen ohne Probleme realisierbar, so dass die Vorteile der Erfindung hier besonders gut zur Geltung kommen.

Die unterschiedlichen Empfindlichkeiten der einzelnen Pixel-Elemente 7 werden durch eine Gewichtung der einzelnen Pixel bei der Überlagerung der Einzeldatensätze berücksichtigt. Ebenso kann jedem Pixel-Element ein statistischer Fehler sowie ein Offset für den aufgenommenen Messwert zugeordnet werden, die in der Gewichtung des jeweiligen Pixels bei der Überlagerung der aufgenommenen Datensätze 11 berücksichtigt werden. Dabei wird für die zu überlagernden Datenpunkte jeweils der Offset subtrahiert, der Messwert entsprechend der Empfindlichkeit des jeweiligen Pixel-Elements 7 normiert und invers zur Größe des zugeordneten statistischen Fehlers gewichtet wird, so dass sich für jedes Pixel die Gesamtwichtung 1 bzw. 100% ergibt.

Neben den in Fig. 2 dargestellten Sensorchips, die mit in ihrer Größe äquivalenten Pixel-Elementen 7 ausgestattet sind, sind unter anderem Sensorchips bekannt, die in ihren Randbereichen größere Pixel-Elemente aufweisen (Superpixel-Elemente). Diese Superpixel-Elemente bewirken, dass die Auflösung in diesen Bereichen verringert ist. Durch das erfindungsgemäße Verfahren lässt sich auch dieser unangenehme Effekt beheben, da bei geeigneter Verschiebung der Sensorchips 8 die Bereiche, die zuvor durch die Superpixel-Elemente vermessen wurden, bei mindestens einer weiteren Messung durch ein fotosensitives Pixel-Element **15** vermessen wird. Somit ergibt sich über die gesamte Detektorfläche eine homogenere Ortsauflösung.

Aus Fig. 3b ist außerdem ersichtlich, dass der vermessene Bereich des Gesamtdatensatzes 13 (dünner Rahmen) größer ist als der Bereich, der durch den Datensatz 11 erfasst wird (fetter Rahmen). Mit dem erfindungsgemäßen Verfahren können demnach sowohl störende Einflüsse der Randbereiche 10 innerhalb eines Einzeldetektors 1, eine Verringerung von toten Pixeln 12 im Gesamtdatensatz 13 als auch gleichzeitig eine Vergrößerung des Aufnahmebereichs realisiert werden.

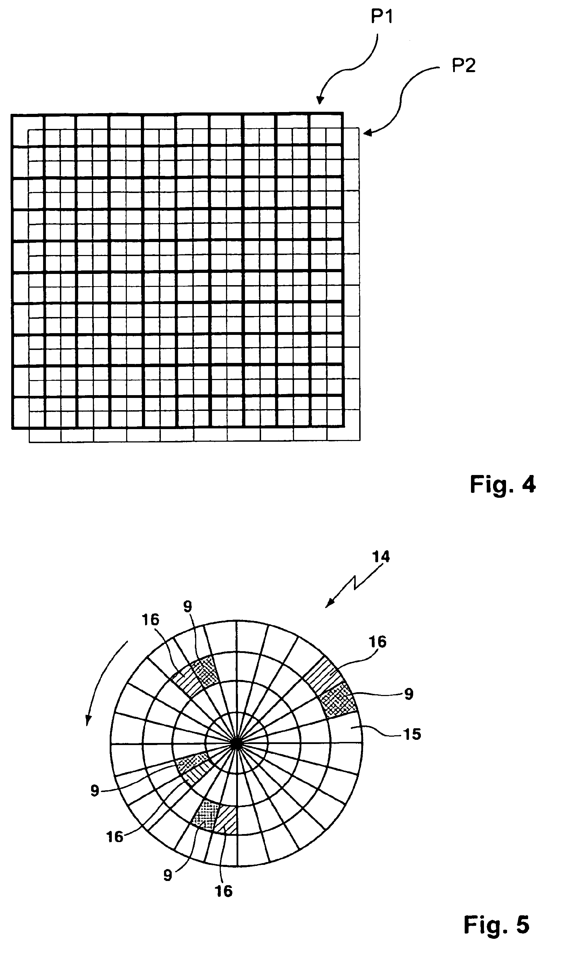

Aus technologischen Gründen sowie aus Kostengründen finden oft grob strukturierten Pixel-Detektoren Verwendung, bei denen die Anzahl der Kanäle verringert werden kann. Allerdings weisen diese für viele Anwendungen nur eine unzureichende Ortsauflösung auf. Das erfindungsgemäße Verfahren ermöglicht die Verwendung solcher grob strukturierter, kostengünstiger Pixel-Detektoren bei einer verbesserten Ortsauflösung. In **Fig. 4** ist dies schematisch dargestellt. Ein grob strukturierter rechteckigen Einzeldetektors 8 wird nach der Aufnahme eines ersten Datensatzes in einer Position P1 (fetter Rahmen) um ein Subpixel-Element, in diesem Fall um die Hälfte eines Pixel-Elements 7, diagonal in eine Position P2 (dünner Rahmen) verschoben. Auf diese Weise können Änderungen des Signals innerhalb eines Pixels detektiert werden, wodurch die Ortsauflösung des Gesamtdatensatzes erhöht wird.

Besonders gut kommen die Vorteile der Erfindung zur Geltung, wenn eine oder mehrere Verschiebungen um ein ganzzahliges Vielfaches eines Pixel-Elements 7 mit einer oder mehreren darauf folgenden Verschiebungen um einen Subpixel miteinander kombiniert werden. Auf diese Weise erhält man unter Verwendung eines konventionellen Einzeldetektors 1 einen Gesamtdatensatz mit einer verringerten Anzahl an toten Pixeln 12, idealerweise Null, und einer verbesserten Ortsauflösung.

Die Anwendung des erfindungsgemäßen Verfahrens ist nicht auf rechteckige Sensorchips beschränkt. Auch radial symmetrische Sensorchips 14 mit Ringsegmenten als Pixel-Elemente, wie in **Fig. 5** gezeigt, können für dieses Verfahren eingesetzt werden. Die Verschiebung erfolgt hier vorzugsweise in Form einer Drehbewegung um den Mittelpunkt des radial symmetrischen Einzeldetektors 14. Für die Berechnung beziehungsweise Optimierung der Verschiebung bietet es sich an, bei derartigen radial symmetrischen Sensorchips Polarkoordinaten zu verwenden. Die schadhaften beziehungsweise die mit 0 gewichteten Pixel-Elemente 9 werden auf benachbarte Plätze **16** verschoben, so dass die toten Pixel des ersten Datensatzes, im zweiten Datensatz mittels fotosenisitver Pixel-Elemente 15 vermessen werden und somit konstruktiv zu dem Gesamtdatensatz beitragen können.

Das erfindungsgemäße Röntgenanalysegerät beziehungsweise das erfindungsgemäße Verfahren zum Betrieb eines Röntgenanalysegeräts ermöglicht auf einfache Weise, insbesondere ohne Verschiebung der zum Röntgenanalysegerät gehörenden optischen Elementen, eine Verringerung der aufgrund von schadhaften oder mit 0 gewichteten Pixel-Elementen entstehenden toten Pixel im Datensatz. Ebenso können bei der Verwendung von aus mehreren Sensorchips zusammengesetzten Einzeldetektors störende Einflüsse der Randbereiche bei der Erstellung von Datensätzen vermieden werden. Darüber hinaus ergibt sich ein vergrößerter Aufnahmebereich und bei geeigneter Wahl der Verschiebung des Einzeldetektors eine verbesserte Ortsauflösung der Messung.

Bezugszeichenliste

1    Einzeldetektor bestehend aus einem oder mehreren Sensorchips 8
2    ersten Stufe einer Auswerteelektronik
3    Träger
4    Piezoantrieb
5    Bumps
6    flexible Verbindung
7    Pixel-Elemente
8    Sensorchip
9    schadhafte Pixel-Elemente
10   Randbereich
11   Datensatz
12   tote Pixel
13   Gesamtdatensatz
14   radial symmetrischer Einzeldetektor

15    fotosensitive Pixel-Elemente
16    Plätze der verschobene schadhafte Pixel-Elemente
17    Quelle für Röntgenstrahlung
18    optische Elemente
19    Objekt
P1    erste Position
P2    zweite Position
B    Breite der blinden Randbereiche
b    Breite eines Pixel-Elements

**Patentansprüche**

1. Verfahren zum Betrieb eines Röntgenanalysegerätes mit einer Quelle (17) für Röntgenstrahlung, einem zu untersuchenden Objekt (19), das mit der Röntgenstrahlung beleuchtet wird, und einem flächigen zweidimensionalen Array-Detektor mit Pixel-Elementen (7) zum ortsaufgelösten Nachweis der von dem Objekt (19) ausgehenden Röntgenstrahlung, wodurch ein Datensatz, insbesondere in Form eines digitalisierten Diffraktogramms und/oder Spektrums erhalten wird,
**gekennzeichnet durch** folgende Schritte:

(a) Aufnahme eines ersten Datensatzes (11) in einer ersten relativen räumlichen Position (P1) von Quelle (17), Objekt (19) und Detektor;
(b) Verschieben und/oder Drehen des Detektors in der Detektorfläche relativ zu Quelle (17) und Objekt (19), wobei die relative Position von Quelle (17) und Objekt (19) nicht verändert wird;
(c) Aufnahme eines zweiten Datensatzes (11) in der nach Schritt (b) verschobenen Position (P2), wobei mit der Verschiebung und/oder Drehung des Detektors zwischen zwei Aufnahmen von Datensätzen (11) weniger als 10 Pixel-Elemente (7) überstrichen werden;
(d) Überlagern der aufgenommenen Datensätze (11) zu einem Gesamtdatensatz (13), wobei die Pixel der aufgenommenen Datensätze entsprechend ihrer tatsächlichen relativen Position zu Quelle (17) und Objekt (19) kombiniert werden.

2. Verfahren nach Anspruch 1, **dadurch gekennzeichnet, dass** vor Schritt (d) die Schritte (b) bis (c) mit variierender Verschiebung einmal oder mehrfach wiederholt werden.

3. Verfahren nach Anspruch 2, **dadurch gekennzeichnet, dass** die Datensätze (11) während einer kontinuierlichen, vorzugsweise periodischen Verschiebung und/oder Drehung des Detektors aufgenommen werden.

4. Verfahren nach Anspruch 3, **dadurch gekennzeichnet, dass** zwischen zwei Aufnahmen von aufeinander folgenden Datensätzen (11) der Detektor um genau 1 Pixel-Element (7) verschoben wird.

5. Verfahren nach Anspruch 3, **dadurch gekennzeichnet, dass** zwischen zwei Aufnahmen von aufeinander folgenden Datensätzen (11) der Detektor um einen Bruchteil, vorzugsweise $\frac{1}{n}$ eines Pixel-Elements (7), verschoben wird, wobei $n \in \mathrm{N}$, vorzugsweise $n < 10$.

6. Verfahren nach einem der Ansprüche 2 bis 5, **dadurch gekennzeichnet, dass** die Verschiebungen des Detektors unterschiedliche Richtungen in der Detektorfläche umfassen.

7. Verfahren nach einem der vorhergehenden Ansprüche, **dadurch gekennzeichnet, dass** in Schritt (d) die Pixel der Randbereiche des gesamten Datensatzes (13), zu denen nicht die Datensätze (11) aller Einzelaufnahmen beitragen, entsprechend dem Inversen ihrer Aufnahmehäufigkeit gewichtet werden.

8. Verfahren nach einem der vorhergehenden Ansprüche, **dadurch gekennzeichnet, dass** jedem Pixelelement (7) individuell eine Empfindlichkeit und/oder ein statistischer Fehler und/oder ein Offset für den aufgenommenen Messwert zugeordnet werden, die in Schritt (d) in einer Gewichtung des jeweiligen Pixels bei der Überlagerung der aufgenommenen Datensätze (11) berücksichtigt werden.

9. Verfahren nach Anspruch 8, **dadurch gekennzeichnet, dass** die Überlagerung der aufgenommenen Datensätze (11) derart erfolgt, dass für die zu überlagernden Datenpunkte jeweils der Offset subtrahiert, der Messwert entsprechend der Empfindlichkeit des jeweiligen Pixel-Elements (7) normiert und invers zur Größe des zugeordneten statistischen Fehlers gewichtet wird, wobei für jedes Pixel die Gesamtwichtung 1 bzw. 100% ergibt.

10. Verfahren nach Anspruch 8 oder 9, **dadurch gekennzeichnet, dass** die Beiträge einzelner Pixel-Elemente (9) bei der Überlagerung der Datensätze (11) in Schritt (d) fest mit Null gewichtet werden, insbesondere bei schadhaften Pixel-Elementen (9), von denen bekannt ist, dass sie blind sind, stark fluktuierende Signale erzeugen oder dauernd ihren Sättigungswert anzeigen.

11. Verfahren nach Anspruch 1, **dadurch gekennzeichnet, dass** die Trajektorien der jeweiligen Verschiebung an die räumliche Verteilung der schadhaften Pixel-Elemente (9) angepasst werden, insbesondere derart, dass möglichst kein Datenpunkt des Gesamtdatensatzes (13) ausschließlich aus der Überlagerung von Signalbeiträgen schadhafter Pixel-Elemente (9) besteht.

**12.** Verfahren nach Anspruch 10 oder 11, **dadurch gekennzeichnet, dass** der Detektor aus mehreren jeweils über blinde Randbereiche (10) aneinander angrenzenden Sensorchips (8) zusammengesetzt ist, und dass die blinden Randbereiche (10) wie schadhafte Pixel-Elemente (9) behandelt werden.

**13.** Verfahren nach einem der vorhergehenden Ansprüche, **dadurch gekennzeichnet, dass** die Trajektorien der jeweiligen Verschiebungen so gewählt werden, dass der gesamte statistische Fehler des Gesamtdatensatzes (13) minimiert wird.

**14.** Röntgenanalysegerät eingerichtet zur Durchführung des Verfahrens nach einem der Ansprüche 2 bis 13 mit einer Quelle (17) für Röntgenstrahlung, einem zu untersuchenden Objekt (19), das mit der Röntgenstrahlung beleuchtet wird und einem flächigen zweidimensionalen Array-Detektor mit Pixel-Elementen (7) zum ortsaufgelösten Nachweis der von dem Objekt (19) ausgehenden Röntgenstrahlung, wodurch ein Datensatz, insbesondere in Form eines digitalisierten Diffraktogramms und/oder Spektrums erhalten wird,
**dadurch gekennzeichnet, dass** Mittel zum

(a) Aufnehmen eines ersten Datensatzes (11) in einer ersten relativen räumlichen Position (P1) von Quelle (17), Objekt (19) und Detektor,
(b) Verschieben und/oder Drehen des Detektors in der Detektorfläche relativ zur Quelle (17) und zum Objekt (19), wobei die relative Position von Quelle (17) und Objekt (19) nicht verändert wird,
(c) Aufnehmen eines zweiten Datensatzes (11) in der nach Schritt (b) verschobenen Position (P2),
(d) Überlagern der aufgenommenen Datensätze (11) zu einem Gesamtdatensatz (13), wobei die Pixel der aufgenommenen Datensätze (11) entsprechend ihrer tatsächlichen relativen Position zu Quelle (17) und Objekt (19) kombiniert werden,

vorgesehen sind.

**15.** Röntgenanalysegerät nach Anspruch 14, **dadurch gekennzeichnet, das** ein Piezoantrieb (4) zum Verschieben des Detektors vorgesehen ist.

**16.** Röntgenanalysegerät nach einem der Ansprüche 14 bis 15, **dadurch gekennzeichnet, dass** der Array-Detektor zusammen mit einer ersten Stufe einer Auswerteelektronik auf einem während der Messung nicht bewegten Träger (3) beweglich angeordnet ist, wobei die erste Stufe über eine flexible Verbindung (6) mit einer weiteren Stufe der Auswerteelektronik für Signalübertragung elektrisch verbunden ist.

**17.** Röntgenanalysegerät nach Anspruch 16, **dadurch gekennzeichnet, dass** die flexible Verbindung (6) eine dünne Folie, vorzugsweise eine Polyimidfolie, mit integrierten Leiterbahnen umfasst.

**18.** Röntgenanalysegerät nach einem der Ansprüche 14 bis 17 zur Durchführung des Verfahrens nach Anspruch 13, **dadurch gekennzeichnet, dass** die Breite B der blinden Randbereiche (10) ein ganzzahlig Vielfaches der Breite b eines Pixel-Elements (7) beträgt.

**Claims**

**1.** Method for operating an X-ray analysis device having a source (17) for X-ray radiation, an object (19) under investigation which is irradiated with X-rays, and a two-dimensional array detector with pixel elements (7) for spatially resolved detection of the X-rays emitted by the object (19), wherein a data set, in particular, in the form of a digitized diffractogram and/or spectrum is obtained,
the method **characterized by** the following steps:

a) recording a first data set (11) in a first relative spatial position (P1) of source (17), object (19) and detector;
b) displacement and/or rotation of the detector in the detector surface relative to the source (17) and the object (19), wherein the relative position of source (17) and object (19) is not changed;
c) recording a second data set (11) in the position (P2) displaced according to step (b), wherein less than 10 pixel elements (7) are swept between two recordings of data sets (11) through displacement and/or rotation of the detector;
d) superposition of the recorded data sets (11) to form an overall data set (13), wherein the pixels of the recorded data sets are combined corresponding to their actual position relative to the source (17) and object (19).

**2.** Method according to claim 1, **characterized in that** steps (b) and (c) are repeated before step (d) once or several times with varying displacement.

**3.** Method according to claim 2, **characterized in that** the data sets (11) are recorded during continuous, preferably periodic displacement and/or rotation of the detector.

**4.** Method according to claim 3 **characterized in that** the detector is displaced by exactly 1 pixel element (7) between two recordings of sequential data sets (11).

5. Method according to claim 3, **characterized in that** the detector is displaced by a fraction, preferably 1/n of a pixel element (7) between two sequential recordings of data sets (11), wherein n is a positive integer, preferably n<10.

6. Method according to any one of the claims 2 through 5, **characterized in that** the detector is displaced in different detector surface directions.

7. Method according to any one of the preceding claims, **characterized in that** in step (d), the pixels of the edge regions of the entire data set (13) to which the data sets (11) of all individual recordings do not contribute, are weighted corresponding to the inverse of their recording frequency.

8. Method according to any one of the preceding claims, **characterized in that** each pixel element (7) is individually associated with a sensitivity and/or a statistical error and/or an offset for the recorded measured value, which are considered in step (d) in weighting of the respective pixel during superposition of the recorded data sets (11).

9. Method according to claim 8, **characterized in that** the recorded data sets (11) are superposed such that the offset is subtracted for each data point to be superposed, the measured value is normalized corresponding to the sensitivity of the respective pixel element (7) and weighted inversely to the magnitude of the associated statistical error, wherein each pixel has an overall weighting of 1 or 100%.

10. Method according to claim 8 or 9, **characterized in that** the contributions of individual pixel elements (9) are fixedly weighted with zero when the data sets (11) are superposed in step (d), in particular of faulty pixel elements (9) which are known to be blind, generate highly fluctuating signals or permanently display their saturation value.

11. Method according to claim 1, **characterized in that** the trajectories of the respective displacement are adjusted to the spatial distribution of the faulty pixel elements (9), in particular, such that, if possible, no data point of the overall data set (13) consists exclusively of superposed signal contributions of faulty pixel elements (9).

12. Method according to claim 10 or 11, **characterized in that** the detector is composed of several sensor chips (8) bordering via blind edge regions (10), and the blind edge regions (10) are treated as faulty pixel elements (9).

13. Method according to any one of the preceding claims, **characterized in that** the trajectories of the respective displacements are selected such that the overall statistical error of the complete data set (13) is minimized.

14. X-ray analysis device designed to perform a method according to any one of claims 2 to 13, with an X-ray radiation source (17), an object (19) under investigation which is irradiated with X-ray radiation, and a two-dimensional array detector with pixel elements (7) for spatially resolved detection of the X-ray radiation emitted by the object (19), wherein a data set, in particular, in the form of a digitized diffractogram and/or spectrum is obtained,
**characterized in that** means are provided for

a) recording a first data set (11) in a first relative spatial position (P1) of source (17), object (19) and detector;
b) displacement and/or rotation of the detector in the detector surface relative to the source (17) and the object (19), wherein a relative position of source (17) and object (19) is not changed;
c) recording a second data set (11) in the position (P2) displaced according to step b);
d) superposition of the recorded data sets (11) to form an overall data set (13), wherein the pixels of the recorded data sets (11) are combined corresponding to their actual position relative to the source (17) and object (19).

15. X-ray analysis device according to claim 14 which is **characterized in that** a piezo drive (4) is provided to displace the detector.

16. X-ray analysis device according to any one of the claims 14 to 15, **characterized in that** the array detector, together with a first stage of an evaluation electronics, is movably disposed on a carrier (3) which does not move during measurement, wherein the first stage is electrically connected to a further stage of the evaluation electronics via a flexible connection (6) for transmitting signals.

17. X-ray analysis device according to claim 16, **characterized in that** the flexible connection (6) comprises a thin sheet, preferably a polyimide sheet with integrated conductor paths.

18. X-ray analysis device according to any one of the claims 14 through 17, for carrying out the method according to claim 13, **characterized in that** the width B of the blind edge regions (10) is an integer multiple of the width b of a pixel element (7).

## Revendications

1. Procédé de fonctionnement d'un appareil d'analyse aux rayons X avec une source (17) de rayonnement X, un objet à examiner (19) qui est éclairé par le rayonnement X et un détecteur matriciel bidimensionnel plan pourvu d'éléments de pixels (7) pour la détection à résolution spatiale du rayonnement X provenant de l'objet (19), de sorte que l'on obtient un jeu de données, en particulier sous la forme d'un diffractogramme et/ou d'un spectre numérisé, **caractérisé par** les étapes suivantes :

   (a) enregistrement d'un premier jeu de données (11) à une première position spatiale relative (P1) de la source (17), de l'objet (19) et du détecteur ;
   (b) déplacement et/ou rotation du détecteur dans la surface de détection par rapport à la source (17) et à l'objet (19), la position relative de la source (17) et de l'objet (19) n'étant pas modifiée ;
   (c) enregistrement d'un deuxième jeu de données (11) à la position (P2) déplacée selon l'étape (b), moins de 10 éléments de pixels (7) étant balayés par le déplacement et/ou la rotation du détecteur entre deux enregistrements de jeux de données (11) ;
   (d) superposition des jeux de données (11) enregistrés en un jeu de données total (13), les pixels des jeux de données enregistrés étant combinés en fonction de leur position relative effective par rapport à la source (17) et à l'objet (19).

2. Procédé selon la revendication 1, **caractérisé en ce qu'**avant l'étape (d), les étapes (b) à (c) sont répétées une fois ou plusieurs fois avec un déplacement variable.

3. Procédé selon la revendication 2, **caractérisé en ce que** les jeux de données (11) sont enregistrés pendant un déplacement et/ou une rotation continus, de préférence périodiques du détecteur.

4. Procédé selon la revendication 3, **caractérisé en ce qu'**entre deux enregistrements de jeux de données (11) successifs, le détecteur est déplacé d'exactement 1 élément de pixel (7).

5. Procédé selon la revendication 3, **caractérisé en ce qu'**entre deux enregistrements de jeux de données (11) successifs, le détecteur est déplacé d'une fraction, de préférence de $\frac{1}{n}$ d'un élément de pixel (7), avec $n \in N$, de préférence $n < 10$.

6. Procédé selon l'une des revendications 2 à 5, **caractérisé en ce que** les déplacements du détecteur comprennent des directions différentes dans la surface de détection.

7. Procédé selon l'une des revendications précédentes, **caractérisé en ce qu'**à l'étape (d), les pixels des régions de bord du jeu de données total (13), auxquelles ne contribuent pas les jeux de données (11) de tous les enregistrements individuels, sont pondérés en fonction de l'inverse de leur fréquence d'enregistrement.

8. Procédé selon l'une des revendications précédentes, **caractérisé en ce qu'**à chaque élément de pixel (7) sont associés individuellement une sensibilité et/ou une erreur statistique et/ou un décalage pour la valeur de mesure enregistrée, desquels il est tenu compte à l'étape (d) dans une pondération du pixel respectif lors de la superposition des jeux de données (11) enregistrés.

9. Procédé selon la revendication 8, **caractérisé en ce que** la superposition des jeux de données (11) enregistrés est réalisée de manière que pour chacun des points de données à superposer, le décalage est soustrait, la valeur de mesure normalisée en fonction de la sensibilité de l'élément de pixel (7) respectif et pondérée inversement à la grandeur de l'erreur statistique associée, la pondération totale pour chaque pixel étant de 1, ou 100 %.

10. Procédé selon la revendication 8 ou 9, **caractérisé en ce que** les contributions de certains éléments de pixels (9) lors de la superposition des jeux de données (11) à l'étape (d) sont pondérées de manière fixe par zéro, en particulier en cas d'éléments de pixels (9) défectueux, dont il est connu qu'ils sont aveugles, génèrent des signaux fortement fluctuants ou affichent en permanence leur valeur de saturation.

11. Procédé selon la revendication 1, **caractérisé en ce que** les trajectoires du déplacement respectif sont adaptées à la répartition spatiale des éléments de pixels (9) défectueux, en particulier de manière que, dans la mesure du possible, aucun point de données du jeu de données total (13) ne soit constitué exclusivement de la superposition de contributions au signal d'éléments de pixels (9) défectueux.

12. Procédé selon la revendication 10 ou 11, **caractérisé en ce que** le détecteur est composé de plusieurs puces de détection (8) adjacentes chaque fois par l'intermédiaire de régions de bord aveugles (10) et que les régions de bord aveugles (10) sont traitées comme des éléments de pixels (9) défectueux.

**13.** Procédé selon l'une des revendications précédentes, **caractérisé en ce que** les trajectoires des déplacements respectifs sont choisies de manière à minimiser l'erreur statistique totale du jeu de données total (13).

**14.** Appareil d'analyse aux rayons X conçu pour réaliser le procédé selon l'une des revendications 2 à 13, avec une source (17) de rayonnement X, un objet à examiner (19) qui est éclairé par le rayonnement X et un détecteur matriciel bidimensionnel plan pourvu d'éléments de pixels (7) pour la détection à résolution spatiale du rayonnement X provenant de l'objet (19), de sorte que l'on obtient un jeu de données, en particulier sous la forme d'un diffractogramme et/ou d'un spectre numérisé,
**caractérisé en ce qu'**il est prévu des moyens pour

(a) enregistrer un premier jeu de données (11) à une première position spatiale relative (P1) de la source (17), de l'objet (19) et du détecteur,
(b) déplacer et/ou tourner le détecteur dans la surface de détection par rapport à la source (17) et à l'objet (19), la position relative de la source (17) et de l'objet (19) n'étant pas modifiée ;
(c) enregistrer un deuxième jeu de données (11) à la position (P2) déplacée selon l'étape (b),
(d) superposer les jeux de données (11) enregistrés en un jeu de données total (13), les pixels des jeux de données (11) enregistrés étant combinés en fonction de leur position relative effective par rapport à la source (17) et à l'objet (19).

**15.** Appareil d'analyse aux rayons X selon la revendication 14, **caractérisé en ce qu'**il est prévu un entraînement piézoélectrique (4) pour déplacer le détecteur.

**16.** Appareil d'analyse aux rayons X selon l'une des revendications 14 à 15, **caractérisé en ce que** le détecteur matriciel est disposé de manière mobile en commun avec un premier étage d'une électronique d'évaluation sur un support (3) qui n'est pas déplacé pendant la mesure, le premier étage étant relié électriquement par une liaison flexible (6) à un autre étage de l'électronique d'évaluation pour la transmission de signaux.

**17.** Appareil d'analyse aux rayons X selon la revendication 16, **caractérisé en ce que** la liaison flexible (6) comprend une feuille mince, de préférence une feuille de polyimide, avec des pistes conductrices intégrées.

**18.** Appareil d'analyse aux rayons X selon l'une des revendications 14 à 17 pour réaliser le procédé selon la revendication 13, **caractérisé en ce que** la largeur B des régions de bord aveugles (10) est un multiple entier de la largeur b d'un élément de pixel (7).

**Fig. 1**

Fig. 2

**Fig. 3a**

**Fig. 3b**

P1

P2

**Fig. 4**

14

16    9

16

9

15

9

16

9

16

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GERHARD LUTZ.** *Semiconductor radiation detectors*
- **B. MIKULEC et al.** Development of Segmented Semiconductor Arrays for Quantum Imaging. Elsevier Science
- **N. WERMES.** Pixel detectors for particle physics and imaging applications. Elsevier Science Direct
- **H. GÖBEL.** *Adv. In X-Ray Analysis,* 1978, vol. 22, 255-265